# EUROPEAN PATENT APPLICATION

(11) **EP 4 707 060 A1**
(43) Date of publication of application: **11.03.2026**
(21) Application number: 25193861.9
(22) Date of filing: 04.08.2025
(51) Int. Cl.: B60L 53/67

(54) **CONTROL DEVICE AND CONTROL METHOD**

(30) Priority: 29.08.2024 JP 2024147882
(71) Applicant: TOYOTA JIDOSHA KABUSHIKI KAISHA, Toyota-shi, Aichi-ken 471-8571 (JP)
(72) Inventor: ENDO, Yoshihiko, NAGOYA-SHI, AICHI-KEN, 451-6015 (JP)
(74) Representative: Cabinet Beau de Loménie

(57) **Abstract**

A control device (20) includes a control unit (23) that compares a total electric power supply amount to be supplied from a system (30) of a first area to the first area, and a total electric power consumption expected amount in the whole of the first area, calculates a first adjustment amount that is a difference when the total electric power supply amount exceeds the total electric power consumption expected amount, determines a second area that is a transmission destination of an electric power amount corresponding to all or part of the calculated first adjustment amount, and causes the system (30) of the first area to obtain the electric power amount corresponding to all or part of the first adjustment amount preferentially from an electric power generation facility (312) that utilizes electric power generation using natural energy and transmit the obtained electric power amount to a system of the second area.

## Description

### BACKGROUND OF THE INVENTION

### 1. Field of the Invention

The present disclosure relates to a control device and a control method.

### 2. Description of Related Art

In related art, a technology of adjusting balance of supply and demand of electric power among a plurality of areas is known. For example, Japanese Unexamined Patent Application Publication No. 2023-175405 (JP 2023-175405 A) discloses a technology of adjusting balance of supply and demand of electric power among a plurality of areas by encouraging an EV vehicle (electricity storage body) to move to an area where an electric power generation amount is sufficient.

### SUMMARY OF THE INVENTION

However, it is difficult to effectively supply to an electricity storage body, electric power in an area where there is an excess of electric power only by encouraging the electricity storage body to move because some people consider that movement is troublesome. There is therefore room for improvement in a technology of adjusting balance of supply and demand of electric power among a plurality of areas.

An object of the present disclosure that has been made in view of such circumferences is to improve a technology of adjusting balance of supply and demand of electric power among a plurality of areas.

A control device according to one aspect of the present disclosure includes a control unit that acquires a total electric power supply amount to be supplied from a system of a first area to the first area, the total electric power supply amount being measured by an electric power sensor, compares the total electric power supply amount and a total electric power consumption expected amount calculated based on a charging plan of an electricity storage body present in the first area, the total electric power consumption expected amount being an electric power consumption expected amount of the whole of the first area including an electric power supply expected amount to the electricity storage body, calculates a first adjustment amount that is a difference when the total electric power supply amount exceeds the total electric power consumption expected amount, determines a second area that is an electric power transmission destination of an electric power amount corresponding to all or part of the calculated first adjustment amount, causes the system of the first area to obtain the electric power amount corresponding to all or part of the first adjustment amount preferentially from an electric power generation facility that utilizes electric power generation using natural energy, and causes the system of the first area to transmit the obtained electric power amount to a system of the second area.

A control device according to one aspect of the present disclosure includes a control unit that compares a total electric power supply amount to be supplied from a system of a first area to the first area, and a total electric power consumption expected amount calculated based on a charging plan of an electricity storage body present in the first area, the total electric power consumption expected amount being an electric power consumption expected amount of the whole of the first area including an electric power supply expected amount to the electricity storage body, calculates a first adjustment amount that is a difference when the total electric power supply amount exceeds the total electric power consumption expected amount, determines a second area that is an electric power transmission destination of an electric power amount corresponding to all or part of the calculated first adjustment amount, causes the system of the first area to obtain the electric power amount corresponding to all or part of the first adjustment amount preferentially from an electric power generation facility that utilizes electric power generation using natural energy, and causes the system of the first area to transmit the obtained electric power amount to a system of the second area.

A control method according to one aspect of the present disclosure to be executed by a control device includes comparing a total electric power supply amount to be supplied from a system of a first area to the first area, and a total electric power consumption expected amount calculated based on a charging plan of an electricity storage body present in the first area, the total electric power consumption expected amount being an electric power consumption expected amount of the whole of the first area including an electric power supply expected amount to the electricity storage body, calculating a first adjustment amount that is a difference when the total electric power supply amount exceeds the total electric power consumption expected amount, determining a second area that is an electric power transmission destination of an electric power amount corresponding to all or part of the calculated first adjustment amount, causing the system of the first area to obtain the electric power amount corresponding to all or part of the first adjustment amount preferentially from an electric power generation facility that utilizes electric power generation using natural energy, and causing the system of the first area to transmit the obtained electric power amount to a system of the second area.

According to one aspect of the present disclosure, a technology of adjusting balance of supply and demand of electric power among a plurality of areas is improved.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram illustrating a schematic configuration of a system according to one embodiment of the present disclosure;
FIG. 2 is a view for explaining adjustment of balance of supply and demand of electric power in a plurality of areas; and
FIG. 3 is a flowchart indicating an operation example of a control device.

### DETAILED DESCRIPTION OF EMBODIMENTS

### Outline of Embodiment

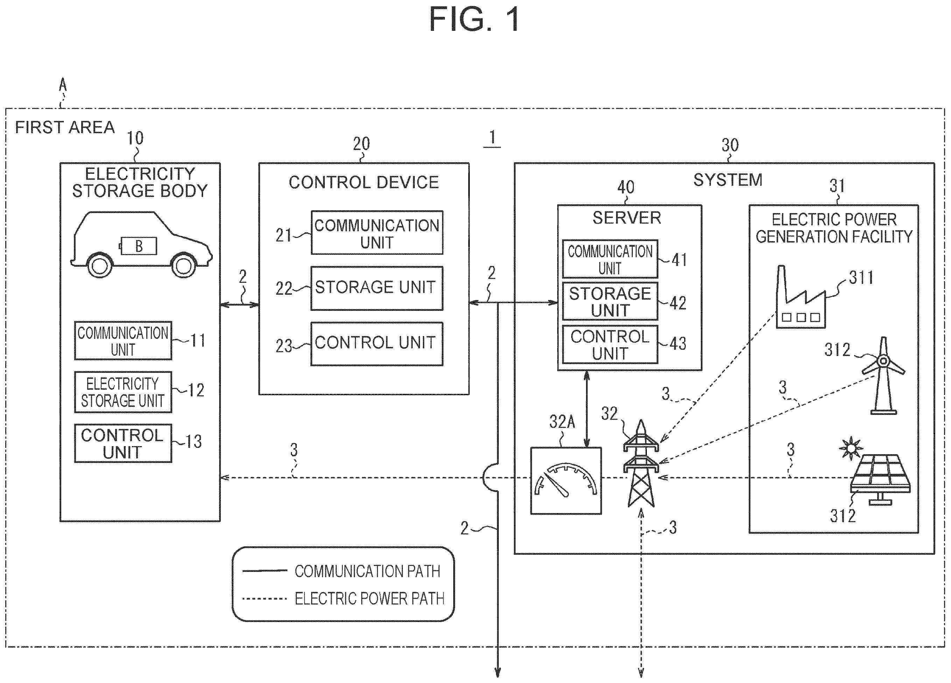

Outline of a system 1 according to an embodiment of the present disclosure will be described with reference to FIG. 1. The system 1 includes an electricity storage body 10, a control device 20, and a system 30. The system 30 includes a server 40. The electricity storage body 10, the control device 20, and the server 40 are communicably connected via a communication network 2. The electricity storage body 10 and an electric power generation facility 31 are connected to each other via an electric power transmission and distribution facility 32 using an electric power line 3. In the present disclosure, an area A will be also expressed as a first area A.

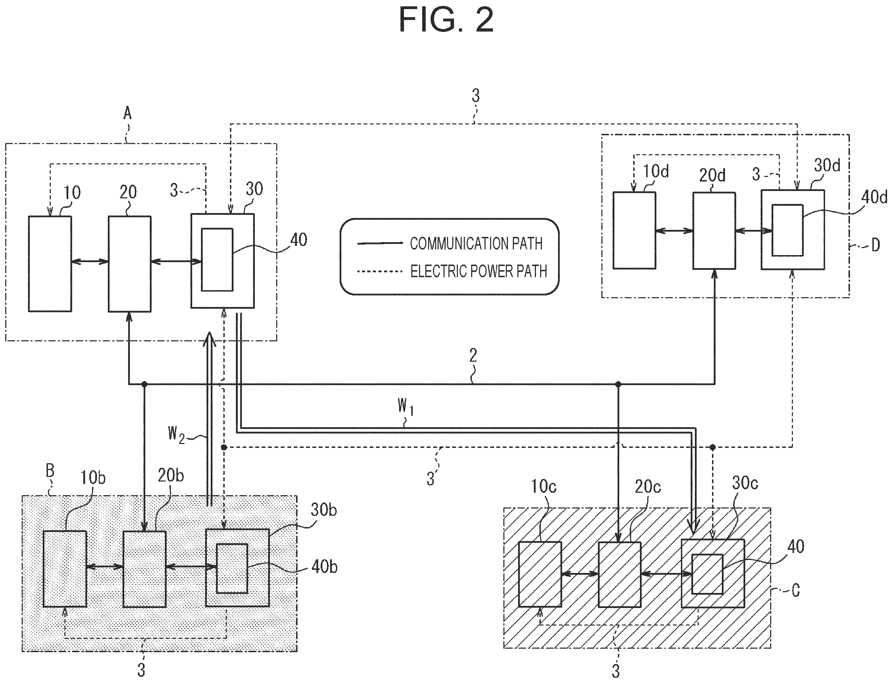

FIG. 2 is a view for explaining adjustment of balance of supply and demand of electric power in a plurality of areas. As illustrated in FIG. 2, the system 30 including the electricity storage body 10, the control device 20 and the server 40 is provided in each of the first area A, and areas B, C, D. Further, the control device 20 in the first area A is communicably connected to control devices 20b, 20c, 20d in the areas B, C, D via the communication network 2. Still further, the system 30 in the first area A and systems 30b, 30c, 30d in the areas B, C, D are connected to each other by the electric power line 3 (interconnection line).

While it is assumed that the electricity storage body 10 is a storage battery provided in a chargeable vehicle such as a battery electric vehicle (BEV) and a plug-in hybrid electric vehicle (PHEV), or at home, in an enterprise, in a public facility, or the like, the electricity storage body 10 is not limited to these.

The control device 20 is a computer which is held by an aggregator on the system side and which controls balance of supply and demand of electric power. The aggregator is a business operator that adjusts balance of supply and demand of electric power in a position between a consumer of electric power and the system 30 operated by an electric power company (an electric power producer, a system operator).

The system 30 indicates the whole facility for supplying electric power to the electricity storage body 10 of a consumer, which is operated by an electric power company (electric power producer, a system operator), which includes the electric power generation facility 31 and the electric power transmission and distribution facility 32, and which performs production of electric power to supply of electric power. Further, the system 30 holds the server 40 that operates the system 30.

The server 40 is a computer for operating the system 30, which is held by an electric power company (an electric power producer, a system operator).

First, outline of the present embodiment will be described, and details will be described later. The control device 20 compares a total electric power supply amount to be supplied from the system 30 of a first area to the first area, and a total electric power consumption expected amount calculated based on a charging plan of the electricity storage body 10 present in the first area, the total electric power consumption expected amount being an electric power consumption expected amount of the whole of the first area including an electric power supply expected amount to the electricity storage body 10, calculates a first adjustment amount that is a difference when the total electric power supply amount exceeds the total electric power consumption expected amount, determines a second area that is an electric power transmission destination of an electric power amount corresponding to all or part of the calculated first adjustment amount, causes the system of the first area to obtain the electric power amount corresponding to all or part of the first adjustment amount preferentially from the electric power generation facility 312 that utilizes electric power generation using natural energy, and causes the system of the first area to transmit the obtained electric power amount to a system of the second area.

In this manner, according to the present embodiment, it is possible to pass an excess of electric power among a plurality of areas based on the charging plan of the electricity storage body 10, so that electric power loss is reduced. Thus, the technology of adjusting balance of supply and demand of electric power among the plurality of areas is improved in that the generated electric power can be optimally consumed without being wasted.

Each component of the system 1 will be described in detail next with reference to FIG. 1.

### Configuration of Electricity Storage Body

The electricity storage body 10 includes a communication unit 11, an electricity storage unit 12, and a control unit 13.

The communication unit 11 includes one or more communication interfaces connected to the communication network 2. The communication interface, for example, supports wired local area network (LAN) standards or wireless LAN standards, but the standards are not limited to these. In the present embodiment, the electricity storage body 10 communicates with the control device 20 via the communication unit 11 and the communication network 2.

While it is assumed that the electricity storage unit 12 is, for example, a storage battery mounted on a chargeable vehicle such as a battery electric vehicle (BEV) and a plug-in hybrid electric vehicle (PHEV), or a storage battery provided at home, in an enterprise, in a public facility, or the like, the electricity storage unit 12 is not limited to these.

The control unit 13 includes at least one processor, at least one dedicated circuit or a combination thereof. The control unit 13 controls overall operation of the electricity storage body 10.

### Configuration of Control Device

As illustrated in FIG. 1, the control device 20 includes a communication unit 21, a storage unit 22, and a control unit 23.

The communication unit 21 includes one or more communication interfaces connected to the communication network 2. The communication interface, for example, supports wired LAN standards or wireless LAN standards, but the standards are not limited to these, and the communication interface may support arbitrary communication standards. In the present embodiment, the control device 20 communicates with the electricity storage body 10 and the server 40 provided in the system 30 via the communication unit 21 and the communication network 2. As illustrated in FIG. 2, the control device 20 communicates with control devices 20b, 20c, 20d in the areas B, C, D via the communication unit 21 and the communication network 2.

The storage unit 22 includes one or more memories. The memory is, for example, a semiconductor memory, a magnetic memory, an optical memory, or the like, but is not limited to these. The storage unit 22 may store arbitrary information to be used for operation of the control device 20, for example, a system program, an application program, embedded software, a total electric power supply amount Ps to be supplied to the first area A from the system 30, and the like.

The control unit 23 includes at least one processor, at least one dedicated circuit or a combination thereof. The control unit 23 executes information processing related to operation of the control device 20.

### Configuration of System

As illustrated in FIG. 1, the system 30 includes the electric power generation facility 31 and the electric power transmission and distribution facility 32. The system 30 includes the server 40 that operates the system 30 (the electric power generation facility 31 and the electric power transmission and distribution facility 32).

The electric power generation facility 31 is classified into an electric power generation facility 311 that utilizes fossil fuel and an electric power generation facility 312 that utilizes natural energy. The electric power generation facility 311 that utilizes fossil fuel is, for example, an electric power generation facility (power station) that performs thermal power generation (brown electric power generation) using fossil fuel such as petroleum, coal and natural gas. The electric power generation facility 312 that utilizes natural energy is an electric power generation facility that performs green electric power generation using solar light, wind power, water power, geothermal power, biomass, wave power, or tidal power.

The electric power transmission and distribution facility 32 is an electric power facility such as the electric power line 3, an electric power substation, and an electric power distribution line. The electric power transmission and distribution facility 32 supplies electricity generated at the electric power generation facility 31 to the electricity storage body 10. The electric power transmission and distribution facility 32 is connected to electric power transmission and distribution facilities of systems in other areas through the electric power line and exchanges electric power.

The electric power transmission and distribution facility 32 includes an electric power sensor 32A that is an electricity meter that measures a total electric power supply amount supplied from the system 30 of the first area A to the first area A. In a case where there is a plurality of electric power transmission and distribution facilities 32 (for example, electric power substations) that supplies electric power from the system 30 of the first area A to the first area A, the electric power sensor 32A may be provided for each electric power substation. The server 40 acquires the total electric power supply amount measured by the electric power sensor 32A and transmits the total electric power supply amount to the control device 20.

The server 40 includes a communication unit 41, a storage unit 42, and a control unit 43.

The communication unit 41 includes one or more communication interfaces connected to the communication network 2. While the communication interface, for example, supports wired LAN standards or wireless LAN standards, the standards are not limited to these, and the communication interface may support arbitrary communication standards. In the present embodiment, the server 40 communicates with the control device 20 via the communication unit 41 and the communication network 2. Further, the server 40 may communicate with servers (expressed as 40b, 40c, 40d in FIG. 2) in the areas B, C, D via the communication unit 41 and the communication network 2.

The control unit 43 includes at least one processor, at least one dedicated circuit or a combination thereof and executes information processing related to operation of the server 40.

### Operation Flow of Terminal Device

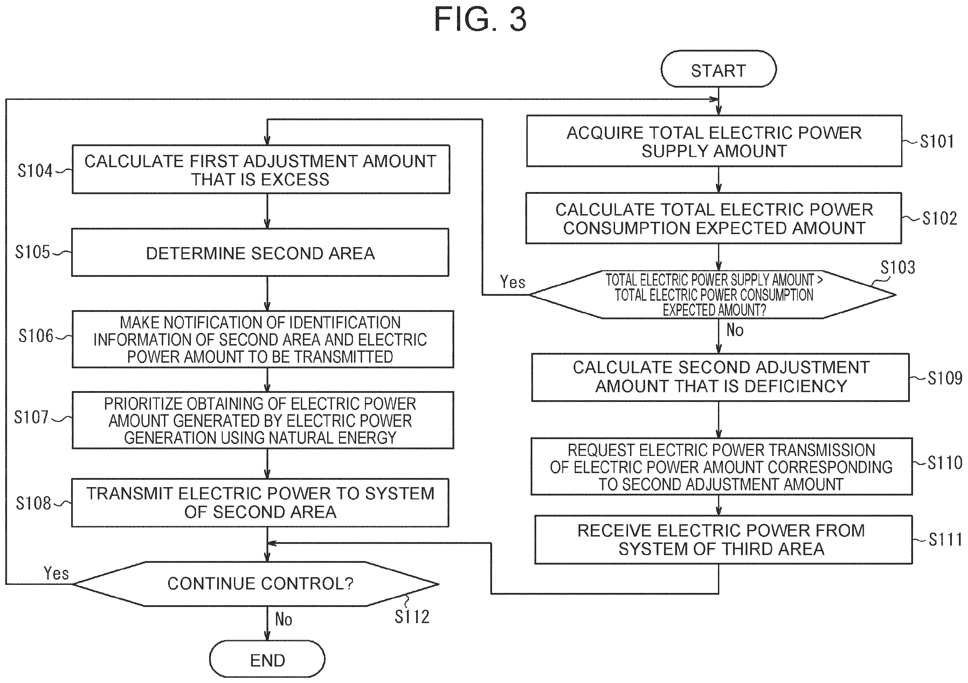

FIG. 3 is a flowchart indicating an operation example of the control device 20. Operation of the control device 20 according to the present embodiment will be described with reference to FIG. 3.

S101: The control unit 23 acquires from the server 40, the total electric power supply amount Ps to be supplied from the system 30 of the first area A to the first area A, the total electric power supply amount Ps being measured by the electric power sensor 32A.

The electric power sensor 32A is an electricity meter provided in the electric power transmission and distribution facility 32 (for example, an electric power substation). The electric power sensor 32A measures the total electric power supply amount Ps (kWh) per hour by integrating an electric power supply amount supplied from the system 30 of the first area A to the first area for each hour. The server 40 acquires the total electric power supply amount Ps measured by the electric power sensor 32A. In a case where there is a plurality of electric power substations in the system 30, the server 40 may set a value obtained by combining the electric power supply amounts per hour acquired from the electric power sensors 32A at the respective electric power substations as the total electric power supply amount Ps (kWh). The server 40 transmits the acquired total electric power supply amount Ps to the control device 20.

S102: The control unit 23 calculates a total electric power consumption expected amount Pc calculated based on a charging plan of the electricity storage body 10 present in the first area A, the total electric power consumption expected amount Pc being an electric power consumption expected amount of the whole of the first area A including an electric power supply expected amount to the electricity storage body 10.

The total electric power consumption expected amount Pc is, in other words, a sum of (i) a charging planned amount of the electricity storage body 10 present in the first area A, and (ii) an electric power consumption expected amount of the whole of the first area A except the charging planned amount of the electricity storage body 10. The electric power consumption expected amount of (ii) is calculated based on an average value of an electric power consumption amount at normal times, and consumption tendency for each season. The control unit 23 calculates the charging planned amount (kWh) of the electricity storage body 10 of (i) based on the charging plans acquired from all the electricity storage bodies 10 via the communication unit 21 and the communication network 2.

S103: The control unit 23 compares the total electric power supply amount Ps supplied from the system 30 of the first area A to the first area A, and the total electric power consumption expected amount Pc calculated based on the charging plan of the electricity storage body 10 present in the first area A, the total electric power consumption expected amount Pc being an electric power consumption expected amount of the whole of the first area including the electric power supply expected amount to the electricity storage body 10. In a case where the total electric power supply amount Ps exceeds the total electric power consumption expected amount Pc, the processing proceeds to S104. In a case where the total electric power supply amount Ps falls below the total electric power consumption expected amount Pc, the processing proceeds to S109.

S104: The control unit 23 calculates a first adjustment amount W₁ (kWh) that is a difference when the total electric power supply amount Ps exceeds the total electric power consumption expected amount Pc.

The first adjustment amount W₁ is an electric power amount (kWh) corresponding to an excess of electric power supply obtained by subtracting the total electric power consumption expected amount Pc from the total electric power supply amount Ps. A second adjustment amount W₂ which will be described later is an electric power amount (kWh) corresponding to a deficiency of electric power supply obtained by subtracting the total electric power supply amount Ps from the total electric power consumption expected amount Pc.

S105: The control unit 23 determines a second area that is an electric power transmission destination of an electric power amount corresponding to all or part of the calculated first adjustment amount W₁.

The second area is (i) an area in which a length of an electric power line connecting a system of the area and the system 30 of the first area A is the shortest or (ii) an area for which the second adjustment amount W₂ is the largest among areas for which the second adjustment amount W₂ is calculated, the second adjustment amount W₂ being a difference when the total electric power supply amount Ps falls below the total electric power consumption expected amount Pc. In the example in FIG. 2, the control unit 23 determines C as the second area. As illustrated in FIG. 2, the system 30 of the first area A supplies the electric power amount corresponding to all or part of the first adjustment amount W₁ in the first area A to the second area C.

Electric power loss upon electric power transmission becomes small as a result of electric power being transmitted to an area in which a length of the electric power line is the shortest, so that efficient electric power transmission can be implemented. Further, as a result of electric power being transmitted to an area for which the second adjustment amount is the largest, that is, electric power supply is needed most, balance of supply and demand of electric power among a plurality of areas is improved.

S106: The control unit 23 notifies the control devices of all the areas B, C, D of identification information of the second area C and an electric power amount to be transmitted to a system of the second area C.

As a result of all the areas receiving the notification, overlapping of electric power supply is prevented, so that balance of supply and demand of electric power among a plurality of areas is improved. Note that the identification information is information which is used by a computer to specify an area and which includes, for example, a combination of numbers and other symbols, but is not limited to this.

S107 - S108: The control unit 23 causes the system 30 of the first area A to obtain an electric power amount corresponding to all or part of the first adjustment amount W₁ preferentially from the electric power generation facility 312 that utilizes electric power generation using natural energy and transmit the obtained electric power amount to the system 30c of the second area C.

The electric power obtained from the system 30 includes electric power generated by the electric power generation facility 311 that utilizes fossil fuel, and electric power generated by the electric power generation facility 312 that utilizes natural energy. The control unit 23 requests the server 40 that operates the system 30 to maximize a proportion of the electric power generated by the electric power generation facility 312 that utilizes natural energy in the electric power amount corresponding to all or part of the first adjustment amount W₁.

S109: The control unit 23 calculates the second adjustment amount W₂ that is a difference when the total electric power supply amount Ps falls below the total electric power consumption expected amount Pc.

S110 - S111: The control unit 23 requests a control device of an area other than the first area A to transmit an electric power amount corresponding to all or part of the calculated second adjustment amount W₂ to the system 30 of the first area A from the system of the area.

The area that transmits the electric power amount corresponding to all or part of the calculated second adjustment amount W₂ to the system 30 of the first area A in response to the request from the control unit 23 will be referred to as a third area. The third area is an area for which the first adjustment amount W₁ is calculated, that is, an area for which an excess is expected when the total electric power supply amount Ps exceeds the total electric power consumption expected amount Pc. In the example in FIG. 2, the third area is B. As illustrated in FIG. 2, the system 30 of the first area A receives supply of the electric power amount corresponding to the second adjustment amount W₂ that is a deficiency in the first area A from the system 30b of the third area B.

S112: The control unit 23 confirms to the server 40 that operates the system 30 as to whether or not to continue adjustment of balance of supply and demand of electric power. In a case where the server 40 makes a response indicating continuation of the adjustment, the processing returns to S101, and in a case where the server 40 makes a response indicating not continuation of the adjustment, the information processing ends.

As described above, the control device 20 according to the present embodiment compares a total electric power supply amount to be supplied from the system 30 of a first area to the first area, and a total electric power consumption expected amount calculated based on a charging plan of the electricity storage body 10 present in the first area, the total electric power consumption expected amount being an electric power consumption expected amount of the whole of the first area including an electric power supply expected amount to the electricity storage body 10, calculates a first adjustment amount that is a difference when the total electric power supply amount exceeds the total electric power consumption expected amount, determines a second area that is an electric power transmission destination of the electric power amount corresponding to all or part of the calculated first adjustment amount, causes the system of the first area to obtain the electric power amount corresponding to all or part of the first adjustment amount preferentially from the electric power generation facility 312 that utilizes electric power generation using natural energy, and causes the system of the first area to transmit the obtained electric power amount to a system of the second area.

In this manner, according to the present embodiment, an excess of electric power can be passed among a plurality of areas based on the charging plan of the electricity storage body 10, so that electric power loss is reduced. Thus, the technology of adjusting balance of supply and demand of electric power among a plurality of areas is improved in that the generated electric power can be optimally consumed without being wasted.

While the present disclosure has been described based on the drawings and the embodiment, it should be noted that a person skilled in the art may make various changes and modifications based on the present disclosure. It should be therefore noted that these changes and modifications are included in the scope of the present disclosure. For example, functions or the like included in each component, each step, or the like, can be rearranged without logical inconsistency, and a plurality of components, steps, or the like, can be combined into one or divided.

For example, in the above-described embodiment, it is also possible to employ an embodiment in which the components and operation of the control device 20 are distributed to a plurality of computers that can perform communication with each other. The aggregator includes an aggregator on the electricity storage body (consumer) side and an aggregator on the system side. The control device 20 in the present disclosure is a computer held by the aggregator on the system side. Thus, a function of acquiring the charging plan from the electricity storage body 10 may be distributed to a computer held by the aggregator on the electricity storage body side that is communicably connected to the electricity storage body 10 and the control device 20.

Further, for example, it is also possible to employ an embodiment in which a general-purpose computer is made to function as the control device 20 according to the above-described embodiment. Specifically, a program describing processing content that implements respective functions of the control device 20 according to the above-described embodiment is stored in a memory of a general-purpose computer, and the program is read and executed by a processor. Thus, the present disclosure can be implemented as a program executable by a processor, or a non-transitory computer-readable medium storing the program.

## Claims

1. A control device (20) comprising a control unit (23) configured to compare a total electric power supply amount to be supplied from a system (30) of a first area to the first area (A), and a total electric power consumption expected amount calculated based on a charging plan of an electricity storage body (10) present in the first area (A), the total electric power consumption expected amount being an electric power consumption expected amount of the whole of the first area including an electric power supply expected amount to the electricity storage body (10), calculate a first adjustment amount (W₁) that is a difference when the total electric power supply amount exceeds the total electric power consumption expected amount, determine a second area (C) that is an electric power transmission destination of an electric power amount corresponding to all or part of the calculated first adjustment amount, cause the system (30) of the first area to obtain the electric power amount corresponding to all or part of the first adjustment amount preferentially from an electric power generation facility (312) that utilizes electric power generation using natural energy, and cause the system (30) of the first area to transmit the obtained electric power amount to a system of the second area (C).

2. The control device according to claim 1, wherein the control unit (23) is configured to acquire the total electric power supply amount, the total electric power supply amount being measured by an electric power sensor (32A).

3. The control device according to claim 1 or 2, wherein the control unit is configured to calculate a second adjustment amount (W₂) that is a difference when the total electric power supply amount falls below the total electric power consumption expected amount, and request a control device (30b) of an area (B) other than the first area (A) to transmit an electric power amount corresponding to all or part of the calculated second adjustment amount (W₂) to the system (30) of the first area from a system of the area.

4. The control device according to any of claims 1 to 3, wherein the second area (B) is an area in which a length of an electric power line connecting the system (30b) of the area and the system (30) of the first area is the shortest or an area for which the second adjustment amount (W₂) is the largest among areas for which the second adjustment amount that is a difference when the total electric power supply amount falls below the total electric power consumption expected amount is calculated.

5. The control device according to any of claims 1 to 4, wherein the control unit (23) is configured to notify control devices (20b, 20c, 20d) of all areas of identification information of the second area and an electric power amount to be transmitted to the system of the second area.

6. A control method to be executed by a control device (20), the control method comprising:
comparing a total electric power supply amount to be supplied from a system (30) of a first area to the first area (A), and a total electric power consumption expected amount calculated based on a charging plan of an electricity storage body (10) present in the first area (A), the total electric power consumption expected amount being an electric power consumption expected amount of the whole of the first area including an electric power supply expected amount to the electricity storage body (10);
calculating a first adjustment amount (W₁) that is a difference when the total electric power supply amount exceeds the total electric power consumption expected amount;
determining a second area (C) that is an electric power transmission destination of an electric power amount corresponding to all or part of the calculated first adjustment amount;
causing the system (30) of the first area to obtain the electric power amount corresponding to all or part of the first adjustment amount preferentially from an electric power generation facility (312) that utilizes electric power generation using natural energy; and
causing the system (30) of the first area to transmit the obtained electric power amount to a system of the second area (C).
